# EUROPÄISCHE PATENTANMELDUNG

(11) **EP 4 660 791 A1**
(43) Veröffentlichungstag der Anmeldung: **10.12.2025**
(21) Anmeldenummer: 24180786.6
(22) Anmeldetag: 07.06.2024
(51) Int. Cl.: G06F 9/38, G06F 9/54

(54) **BETRIEBSVERFAHREN FÜR EINE RECHENEINHEIT UND RECHENEINHEIT**

(71) Anmelder: Siemens Aktiengesellschaft, 80333 München (DE)
(72) Erfinder: Witterauf, Michael, 91052 Erlangen (DE)
(74) Vertreter: Siemens Patent Attorneys

(57) **Zusammenfassung**

Es wird ein Betriebsverfahren für eine Recheneinheit mit einem ersten Mikroprozessor vorgeschlagen, wobei in der Recheneinheit ein zweiter Mikroprozessor als ein Co-Prozessor für den ersten Mikroprozessor betrieben wird, dadurch gekennzeichnet, dass
- im zweiten Mikroprozessor ein WebAssembly-artiger Befehlssatz verwendet wird, wobei
- der erste Mikroprozessor den zweiten Mikroprozessor über ein Hardwareregister für Peripheriegeräte ansteuert oder der erste Mikroprozessor einen RISC-V-Befehlssatz verwendet, welcher mittels einer RISC-V-Erweiterung Funktionen auf dem zweiten Mikroprozessor ausführt.

Weiterhin betrifft die Erfindung eine Recheneinheit.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein Betriebsverfahren gemäß dem Oberbegriff des Patentanspruches 1 sowie eine Recheneinheit gemäß dem Oberbegriff des Patentanspruches 7.

Das Internet der Dinge und auch die fortschreitende industrielle Automatisierung markieren Trends zu immer stärkerer Vernetzung durch eine steigende Zahl von intelligenten Geräten. Diese steigende Zahl an Geräten stellt eine Herausforderung hinsichtlich der Entwicklung von Software, insbesondere an deren Wartung und sicheren Betrieb, dar. Eine steigende Zahl an Geräten und deren Hersteller, kann zum Wildwuchs einer Vielzahl von proprietären Plattformen und damit verbunden Risiken für den Softwarelebenszyklus führen. Diesem Risiko kann mittels einer Verbesserung der Plattformunabhängigkeit und damit verbunden zusätzlichen Sicherheitsmaßnahmen begegnet werden.

Gängige Plattformen oder auch Architekturen für Komponenten von Recheneinheiten, insbesondere Prozessoren oder auch Mikroprozessoren sind x86, ARM (Advanced RISC Machines) oder auch RISC-V. Diese werden mittels meist gleichnamiger Befehlssätze gesteuert. Ein Softwareentwickler schreibt Code in einer Hochsprache wie C oder C++, welcher wiederrum abhängig von der verwendeten Prozessorarchitektur in eine Assemblersprache übersetzt und schließlich in Maschinencode übersetzt wird. Mit steigender Zahl von verwendeten Prozessorarchitekturen steigt auch der Aufwand eine Software für eine bestimmte Hardware erneut zu Kompilieren.

Der vorliegenden Erfindung liegt die Aufgabe zugrunde, die Plattformunabhängigkeit und Sicherheit von Software für Recheneinheiten, zu steigern.

Die Aufgabe wird durch ein Betriebsverfahren mit den Merkmalen des unabhängigen Patentanspruches 1 sowie durch eine Recheneinheit mit den Merkmalen des unabhängigen Patentanspruches 7 gelöst. In den abhängigen Patentansprüchen sind vorteilhafte Ausgestaltungen und Weiterbildungen der Erfindung angegeben.

Das erfindungsgemäße Betriebsverfahren für eine Recheneinheit mit einem ersten Mikroprozessor, wobei in der Recheneinheit ein zweiter Mikroprozessor als ein Co-Prozessor für den ersten Mikroprozessor betrieben wird, erfolgt dadurch, dass
- im zweiten Mikroprozessor ein WebAssembly-artiger Befehlssatz verwendet wird, wobei
- der erste Mikroprozessor den zweiten Mikroprozessor über ein Hardwareregister für Peripheriegeräte ansteuert oder der erste Mikroprozessor einen RISC-V-Befehlssatz verwendet, welcher mittels einer RISC-V-Erweiterung Funktionen auf dem zweiten Mikroprozessor ausführt.

Durch die vorliegende Erfindung kann mittels eines zweiten Mikroprozessors mit einem WebAssembly-artigen Befehlssatz vorteilhafterweise der Zeit- und Energie-intensive Schritt der Interpretation oder Kompilierung von WebAssembly zu Maschinencode vermieden werden und WebAssembly-artige Befehle können stattdessen unmittelbar durch den Befehlssatz des zweiten Mikroprozessors verarbeitet werden. Dies kann die Plattformunabhängigkeit und Wiederverwendbarkeit von Software steigern. Das ist deshalb der Fall, weil unterschiedliche Geräte trotz unterschiedlichen ersten Mikroprozessors vorteilhafterweise die gleiche Software auf Ihrem (hinsichtlich des verwendeten Befehlssatzes) einheitlichen zweiten Mikroprozessor ausführen können. Darüber hinaus kann WebAssembly aus allen gängigen Hochsprachen erzeugt werden, insbesondere aus den Sprachen C und C++.

Die Erfindungsgemäße Recheneinheit mit einem ersten Mikroprozessor, wobei die Recheneinheit einen zweiten Mikroprozessor umfasst, welcher als ein Co-Prozessor für den ersten Mikroprozessor ausgebildet ist, dadurch gekennzeichnet, dass
- der zweite Mikroprozessor zum Einsatz eines WebAssembly-artigen Befehlssatz ausgebildet ist, wobei
- der erste Mikroprozessor dazu ausgebildet ist den zweiten Mikroprozessor über ein Hardwareregister für Peripheriegeräte anzusteuern oder der erste Mikroprozessor für die Nutzung eines RISC-V-Befehlssatz ausgebildet ist, welcher mittels einer RISC-V-Erweiterung Funktionen auf dem zweiten Mikroprozessor ausführt.

Durch die vorliegende Erfindung wird vorteilhafterweise die Auslagerung von zeitintensiven Berechnungen auf einen zweiten Mikroprozessor ermöglicht, was vorteilhafterweise zu einer beschleunigten Berechnung, insbesondere durch Parallelisierung, führen und das Echtzeitverhalten des ersten Mikroprozessors verbessern kann.

Gemäß einer vorteilhaften Ausgestaltung kann der erste Mikroprozessor auf dem zweiten Mikroprozessor ein Softwaremodul instanziieren, wobei durch das Softwaremodul ausgeführte Zugriffe auf einen Hauptspeicher der Recheneinheit durch eine Speicherverwaltungsbaugruppe als Peripheriebauteil des zweiten Mikroprozessors beschränkt werden.

Die Instanziierung eines Softwaremoduls kann insbesondere basierend auf einer Codebasierten Klassenbeschreibung erfolgen, wobei der zweite Mikroprozessor eine Reihe von Instanzen aus derselben Klassenbeschreibung erzeugen kann. Hierbei kann der zweite Mikroprozessor die Ausführung der Instanzen verwalten, insbesondere deren Ausführungsreihenfolge und auch deren gegenseitige Isolation garantieren.

Durch den Einsatz der Speicherverwaltungsbaugruppe kann vorteilhafterweise trotz einer Reihe von parallel instanziierten Softwaremodulen auf dem zweiten Mikroprozessor eine sichere Verarbeitung, ohne fehlerhafte oder boshafte Speicherzugriffe, ermöglicht werden. Ein Zugriff auf gemeinsam genutzte Speicherbereiche kann hierbei möglich bleiben. Darüber hinaus kann die Verteilung von Verarbeitungslogik über drei Baugruppen (erster Mikroprozessor, zweiter Mikroprozessor und Speicherverwaltungsbaugruppe) hinweg die Durchführung softwarebasierter Sicherheitseingriffe vorteilhafterweise erschweren.

In einer vorteilhaften Weiterbildung der Erfindung kann die Speicherverwaltungsbaugruppe jedem instanziierten Softwaremodul einen virtuellen Speicherbereich zuweist, der von Speicherbereichen anderer Softwaremodule isoliert ist.

Die gegenseitige strenge Isolation von Speicherbereichen der einzelnen Softwaremodule kann vorteilhafterweise die Stabilität und allgemeine Sicherheit des Gesamtsystems weiter steigern. Das ist deshalb der Fall, weil fehlerhafte oder böswillige Speicherzugriffe seitens eines Softwaremoduls auf den Speicher eines anderen Softwaremoduls, auf Softwareebene, praktisch ausgeschlossen werden können.

Gemäß einer vorteilhaften Ausgestaltung kann für die Nutzung von isolierten virtuellen Speicherbereichen der Hauptspeicher der Recheneinheit genutzt werden.

Durch Verwendung des Hauptspeichers als eine aus Sicht des zweiten Mikroprozessors externe Baugruppe wird eine räumliche Trennung zwischen beiden Elementen hergestellt, welche vorteilhafterweise die Implementierung von zusätzlichen Sicherheitsmaßnahmen auf dem Verbindungsweg zwischen beiden Elementen ermöglicht. Eine solche Sicherheitsmaßnahme kann insbesondere die galvanische Trennung von Mikroprozessor und Speicher mittels eines Optokopplers sein.

In einer vorteilhaften Weiterbildung der Erfindung können die Funktionen des ersten Mikroprozessors durch eine Registrierung innerhalb des zweiten Mikroprozessors durch diesen aufrufbar gemacht werden.

Durch die Möglichkeit Funktion des ersten Mikroprozessors durch den zweiten Mikroprozessor aufrufbar zu machen, wird der Funktionsumfang des zweiten Mikroprozessors vorteilhafterweise um den des ersten Mikroprozessors erweitert. Es wird angemerkt, dass der zweite Mikroprozessor, vornehmlich Funktionen des ersten Mikroprozessors aufruft, welche nicht wiederum auf den zweiten Mikroprozessor zugreifen. Hierdurch wird vorteilhafterweise eine Rekursion vermieden.

Gemäß einer vorteilhaften Ausgestaltung können nach der Instanziierung eines Softwaremoduls im zweiten Mikroprozessor Daten für das Softwaremodul in einen internen Speicher des zweiten Mikroprozessors geladen werden.

Durch das Laden von Daten in den internen Speicher des zweiten Mikroprozessors, welche für das instanziierte Softwaremodul benötigt werden, insbesondere für dessen Ausführung, kann die Ausführung des Softwaremoduls vorteilhafterweise beschleunigt werden. Das ist deshalb der Fall, weil die Datenverarbeitung mehrheitlich innerhalb des zweiten Mikroprozessors stattfinden kann und es weniger zeitintensive Kommunikation zwischen den Baugruppen, insbesondere zwischen Hauptspeicher und Mikroprozessor gibt.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
Figur 1 die Architektur einer Recheneinheit; und
Figur 2 das Sequenzdiagramm für die Kommunikation zwischen dem ersten Mikroprozessor, dem zweiten Mikroprozessor und der Speicherverwaltungsbaugruppe.

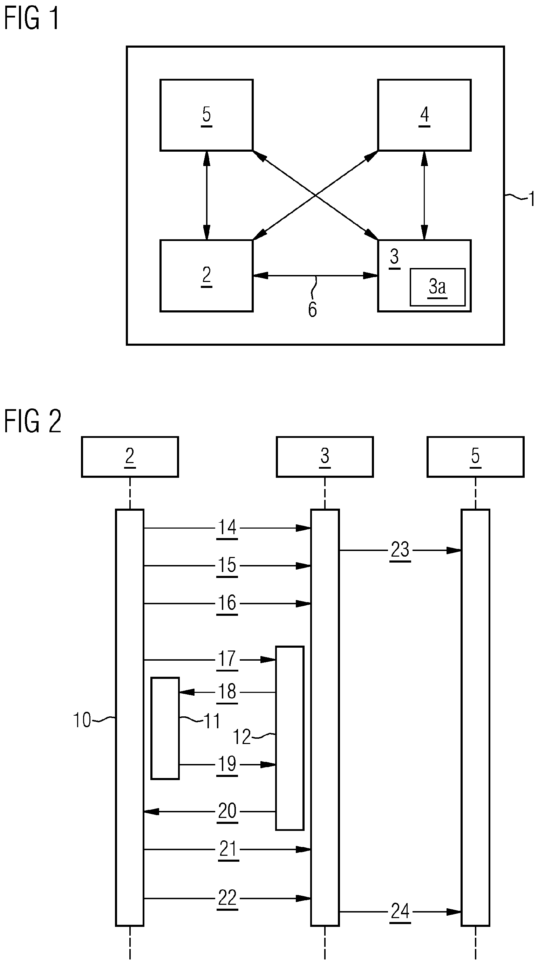

Die Figur 1 zeigt schematisch die Architektur einer Recheneinheit 1 umfassend den ersten Mikroprozessor 2, den zweiten Mikroprozessor 3 mit einem internen Speicher 3a, den Hauptspeicher 4 und die Speicherverwaltungsbaugruppe 5.

Gemäß der vorliegenden Ausgestaltung greifen beide Mikroprozessoren 2, 3 auf denselben Hauptspeicher 4 zu. Darüber hinaus existiert eine gemeinsame Schnittstelle 6 zwischen den beiden Mikroprozessoren 2, 3, worüber ein gegenseitiger Aufruf von Funktionen erfolgt. Im Gegensatz zum Hauptspeicher 4, wird auf den internen Speicher 3a exklusiv durch den zweiten Mikroprozessor 3 zugegriffen.

Die Figur 2 zeigt das Sequenzdiagramm für eine beispielhafte Interaktion zwischen den beiden Mikroprozessoren 2, 3 und der Speicherverwaltungsbaugruppe 5.

Die Interaktion im Sequenzdiagramm zeigt die Instanz der Funktion A auf dem ersten Mikroprozessor 10, mit Beginn der Ausführung dieser Instanz der Funktion 10 erfolgt die Instanziierung eines Softwaremoduls 14 auf dem zweiten Mikroprozessor 3. Im nächsten Schritt erfolgt eine Allokation von virtuellem Speicher 23, wobei diese bei der Speicherverwaltungsbaugruppe 5 angefragt wird. Nach Allokation des virtuellen Speichers 23 erfolgt die Registrierung 15 der Funktion B des ersten Mikroprozessors 2 innerhalb des zweiten Mikroprozessor 3. Mit dem darauffolgenden Schritt erfolgt das Laden von Daten auf den Verarbeitungsstapel 16, wobei sowohl Hauptspeicher 4 als auch interner Speicher 3a als Stapelspeicher oder auch Stack-Speicher organisiert sein können. Daten, die auf den Verarbeitungsstapel geladen werden, werden für die Ausführung von Funktionen auf dem zweiten Mikroprozessor 3 benötigt.

Nach erfolgreichen Laden von Daten auf den Verarbeitungsstapel 16, erfolgt durch den ersten Mikroprozessor 2 der Aufruf 17 einer Funktion A 12 des zweiten Mikroprozessors 3. Diese Funktion beinhaltet neben weiteren Maschineninstruktionen auch den Aufruf 18, welcher sich wiederrum an den ersten Mikroprozessor 2 richtet und die Funktion B 11 des ersten Mikroprozessor 2 auslöst, wobei anschließend ein Rückgabewert 19 an den zweiten Mikroprozessor 3 übergeben wird. Wurde dieser Rückgabewert erfolgreich übergeben liefert der zweite Mikroprozessor 3 wiederrum einen Rückgabewert 20 der Funktion A 12 und beendet diese.

Nach Beendigung der Funktion A 12 des zweiten Mikroprozessors 3 erfolgt eine Abfrage von Daten des Verarbeitungsstapels 21 und der erste Mikroprozessor 2 veranlasst die De-Instanziierung des Softwaremoduls 22 im zweiten Mikroprozessor 3. Anschließend wird durch den zweiten Mikroprozessor 3 eine Freigabe von virtuellem Speicher 24 veranlasst.

Gleichartige, gleichwertige oder gleichwirkende Elemente können in einer der Figuren oder in den Figuren mit denselben Bezugszeichen versehen sein.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Recheneinheit
- 2: Erster Mikroprozessor
- 3: Zweiter Mikroprozessor
- 3a: Interner Speicher
- 4: Hauptspeicher
- 5: Speicherveraltungsbaugruppe
- 6: Schnittstelle zwischen Mikroprozessor und Co-Prozessor
- 10: Funktion A des ersten Mikroprozessors
- 11: Funktion B des ersten Mikroprozessors
- 12: Funktion A des zweiten Mikroprozessors
- 14: Instanziierung des Softwaremoduls
- 15: Registrierung von Funktion B des ersten Mikroprozessors
- 16: Laden von Daten auf den Verarbeitungsstapel
- 17: Aufruf von Funktion des zweiten Mikroprozessors
- 18: Aufruf von Funktion des ersten Mikroprozessors
- 19: Rückgabewert Funktion B des ersten Mikroprozessors
- 20: Rückgabewert Funktion A des zweiten Mikroprozessors
- 21: Abfrage von Daten aus dem Verarbeitungsstapel
- 22: De-Instanziierung des Softwaremodules
- 23: Allokation von virtuellem Speicher
- 24: Freigabe von virtuellem Speicher

## Patentansprüche

1. Betriebsverfahren für eine Recheneinheit (1) mit einem ersten Mikroprozessor (2), wobei in der Recheneinheit (1) ein zweiter Mikroprozessor (3) als ein Co-Prozessor für den ersten Mikroprozessor (2) betrieben wird, **dadurch gekennzeichnet, dass**
- im zweiten Mikroprozessor (3) ein WebAssembly-artiger Befehlssatz verwendet wird, wobei
- der erste Mikroprozessor (2) den zweiten Mikroprozessor (3) über ein Hardwareregister für Peripheriegeräte ansteuert oder der erste Mikroprozessor (2) einen RISC-V-Befehlssatz verwendet, welcher mittels einer RISC-V-Erweiterung Funktionen auf dem zweiten Mikroprozessor (3) ausführt.

2. Betriebsverfahren gemäß Anspruch 1, **gekennzeichnet dadurch, dass** der erste Mikroprozessor (2) auf dem zweiten Mikroprozessor (3) ein Softwaremodul instanziiert (14), wobei durch das Softwaremodul ausgeführte Zugriffe auf einen Hauptspeicher (4) der Recheneinheit (1) durch eine Speicherverwaltungsbaugruppe (5) als Peripheriebauteil des zweiten Mikroprozessors (3) beschränkt werden.

3. Betriebsverfahren gemäß Anspruch 2, **gekennzeichnet dadurch, dass** die Speicherverwaltungsbaugruppe (5) jedem instanziierten Softwaremodul einen virtuellen Speicherbereich zuweist, der von Speicherbereichen anderer Softwaremodule isoliert ist.

4. Betriebsverfahren gemäß Anspruch 3, **gekennzeichnet dadurch, dass** für die Nutzung von isolierten virtuellen Speicherbereichen der Hauptspeicher (4) der Recheneinheit (1) genutzt wird.

5. Betriebsverfahren gemäß Anspruch 2, **gekennzeichnet dadurch, dass** die Funktionen des ersten Mikroprozessors (2) durch eine Registrierung (15) innerhalb des zweiten Mikroprozessors (3) durch diesen aufrufbar gemacht werden.

6. Betriebsverfahren gemäß Anspruch 2, **gekennzeichnet dadurch, dass** nach der Instanziierung (14) eines Softwaremoduls im zweiten Mikroprozessor (3) Daten für das Softwaremodul in einen internen Speicher (3a) des zweiten Mikroprozessors (3) geladen werden (16).

7. Recheneinheit (1) mit einem ersten Mikroprozessor (2), wobei die Recheneinheit (1) einen zweiten Mikroprozessor (3) umfasst, welcher als ein Co-Prozessor für den ersten Mikroprozessor (2) ausgebildet ist, **dadurch gekennzeichnet, dass**
- der zweite Mikroprozessor (3) zum Einsatz eines WebAssembly-artigen Befehlssatz ausgebildet ist, wobei
- der erste Mikroprozessor (2) dazu ausgebildet ist den zweiten Mikroprozessor (3) über ein Hardwareregister für Peripheriegeräte anzusteuern oder der erste Mikroprozessor (2) für die Nutzung eines RISC-V-Befehlssatz ausgebildet ist, welcher mittels einer RISC-V-Erweiterung Funktionen auf dem zweiten Mikroprozessor (3) ausführt.
